# FASCICULE DE BREVET EUROPEEN

(11) **EP 1 105 839 B1**
(45) Date de publication et mention de la délivrance du brevet: **22.02.2006**
(21) Numéro de dépôt: 99939492.7
(22) Date de dépôt: 24.08.1999
(51) Int. Cl.: G06K 19/077

(54) **PROCEDE DE FABRICATION DE CARTE A PUCE SANS CONTACT**
VERFAHREN ZUM HERSTELLEN EINER KONTAKTLOSEN CHIPKARTE
METHOD FOR MAKING A CONTACTLESS CHIP CARD

(30) Priorité: 27.08.1998 FR 9810786
(43) Date de publication de la demande: 13.06.2001
(73) Titulaire: GEMPLUS, 13420 Gemenos (FR)
(72) Inventeur: MARTIN, David, 13600 La Ciotat (FR)
(74) Mandataire: Scheer, Luc
(86) Numéro de dépôt international: PCT/FR1999/002031
(87) Numéro de publication internationale: WO 2000/013138

(56) Documents cités:
- WO-A-95/33246
- WO-A-97/10289
- WO-A-98/29264
- GB-A- 2 279 610
- US-A- 4 241 129
- US-A- 4 450 024
- US-A- 4 737 789

## Description

L'invention concerne un procédé de fabrication de carte à puce sans contact comportant un corps de carte, un module électronique et, connectée audit module, une antenne. De telles cartes sont destinées à la réalisation de diverses opérations telles que, par exemple, des opérations bancaires, des communications téléphoniques, ou diverses opérations d'identification. Elles sont destinées, en particulier, à des opérations de télébillétique dans lesquelles elles sont débitées à distance d'un certain nombre d'unités lors d'un passage à proximité d'une borne et où elles peuvent être rechargées à distance également.

Ces opérations s'effectuent grâce à un couplage électromagnétique à distance entre l'électronique de la carte et un appareil récepteur ou lecteur. Ce couplage s'effectue en mode lecture ou en mode lecture/écriture et la transmission des données s'effectue par radiofréquences ou hyperfréquences.

Telles qu'elles sont réalisées actuellement, les cartes sans contact sont des objets portables aux dimensions normalisées. La norme usuelle ISO 7810 correspond à une carte de format standard de 85mm de longueur, de 54mm de largeur, et de 0,76mm d'épaisseur.

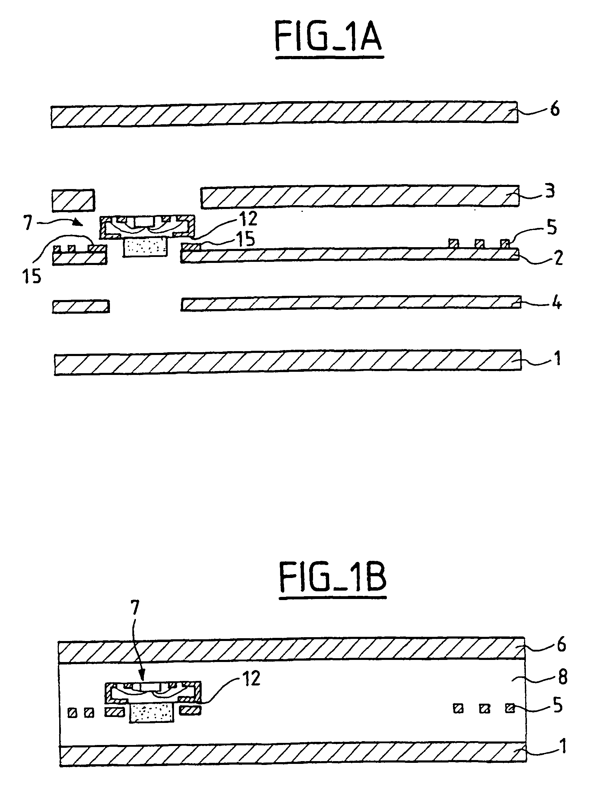

On connaît un procédé de réalisation de cartes sans contact utilisant une technique de lamination à chaud. Un tel procédé est schématisé sur la figure 1A. Il consiste essentiellement à empiler des feuilles plastiques, dont au moins deux d'entre elles sont perforées pour recevoir un module électronique, puis à effectuer une lamination à chaud au moyen d'une presse à plateaux. Une première étape de ce procédé consiste plus particulièrement à disposer une antenne 5 sur une feuille plastique 2 perforée à proximité des bornes de connexion 15 de l'antenne 5. Cette perforation est destinée à recevoir un module électronique 7 dont les plages de contact 12 sont électriquement reliées aux bornes de connexion 15 de l'antenne 5.

Dans une deuxième étape, la feuille plastique 2, supportant l'antenne 5 et le module électronique 7 inséré dans la fenêtre perforée de cette feuille, est recouverte, sur ses deux faces, de deux autres feuilles plastiques 3 et 4. Les feuilles plastiques 3 et 4 comportent également chacune une perforation. Ainsi, une fois les feuilles 2, 3, et 4 assemblées, les perforations permettent de former une cavité destinée à recevoir le module électronique 7. Cette cavité présente des dimensions (longueur et largeur) légèrement supérieures à la taille du module 7. Cet ensemble de feuilles est appelé communément "inlay" ou "inlet". Des feuilles plastiques inférieure 1 et supérieure 6 sont en outre disposées de part et d'autre de cet "inlay" ou "inlet", de manière à former les surfaces recto et verso de la carte. Les feuilles 2, 3 et 4 constituant 1' "inlay" ou "inlet", ainsi que les feuilles inférieure 1 et supérieure 6, sont assemblées et soudées les unes aux autres par lamination à chaud.

Ce procédé présente cependant plusieurs inconvénients. Il est difficile de définir précisément l'épaisseur des feuilles perforées 2, 3 et 4 par rapport à l'épaisseur du module électronique 7. Une épaisseur trop faible des feuilles entraîne une surépaisseur sur le module électronique, donc une fragilisation de celui-ci et des défauts visuels. Une épaisseur trop grande entraîne un déficit de pression sur le module, donc également des défauts visuels. De plus, l'utilisation de plusieurs feuilles perforées nécessite une indexation précise de celles-ci les unes par rapport aux autres. Cette indexation étant difficile à réaliser avec précision, elle implique une baisse du rendement de fabrication et une augmentation du coût de revient des cartes. L'expérience montre qu'il est difficile d'obtenir un aspect visuel correct des cartes à cause de ces difficultés d'indexation des feuilles perforées. Le moindre décalage introduit un marquage visuel de la surface de la carte à proximité du module électronique 7.

Il existe actuellement deux variantes qui permettent d'améliorer cet aspect visuel. La première variante est de réaliser l'assemblage des feuilles 2, 3 et 4 constituant 1' "inlay" ou "inlet" par une première lamination. Deux feuilles fines supplémentaires sont alors introduites de part et d'autre de cet ensemble de trois feuilles 2, 3 et 4 perforées. Cette première lamination permet de gommer les défauts. Une deuxième lamination avec les feuilles 1 et 6 permet alors de former les surfaces recto et verso de la carte. La deuxième variante consiste à introduire localement et de part et d'autre du module électronique 7 un matériau qui flue plus rapidement que le PVC (polychlorure de vinyle) constituant l' "inlay" ou "inlet". Ce matériau en fluant permet alors d'amoindrir les défauts visuels autour du module. Ces deux variantes peuvent être utilisées séparément ou combinées. Mais ces deux variantes présentent également des inconvénients. Une étape supplémentaire de lamination ou l'introduction locale d'un matériau sont des sources de coût supplémentaires.

L'introduction locale d'un matériau peut être également source de surépaisseur au niveau du module. Cette surépaisseur entraîne une fragilisation du module et un aspect visuel inesthétique de la surface de la carte. Les défauts superficiels et le fait que le module se trouve fragilisé impliquent en outre qu'un nombre élevé de cartes est destiné au rebut. En conséquence, cet empilement de feuilles plastiques perforées et laminées à chaud ne peut pas être adapté à une production de masse, à bas coût, de cartes à puce sans contact.

Un autre procédé de fabrication de cartes à puce sans contact, consistant à dispenser une résine liquide entre deux feuilles plastiques, puis à effectuer une lamination à froid, a également été envisagé. Un exemple de ce procédé est schématisé sur la vue en coupe de la figure 1B. Dans ce cas, un ensemble électronique, composé d'une antenne 5 en fil bobiné connectée à un module électronique 7, est disposé au dessus d'une première feuille plastique 1. Puis une résine liquide 8, par exemple en polyuréthane, est dispensée de manière à noyer l'ensemble électronique. Une dernière étape consiste ensuite à recouvrir la résine 8 d'une feuille plastique 6 supérieure puis à effectuer une lamination à froid pour souder la résine 8 aux feuilles inférieure 1 et supérieure 6.

Ce procédé présente cependant, lui aussi, des inconvénients car, au moment de la dispense de la résine liquide, il se forme des bulles d'air autour de l'ensemble électronique. Ces bulles d'air engendrent la création de défauts à la surface de la carte. Ces défauts superficiels sont non seulement inesthétiques mais ils impliquent en outre des difficultés au moment de l'étape d'impression pour décorer et personnaliser la carte. En effet, les défauts superficiels créent des dépressions qui empêchent localement le transfert de matière, si bien qu'il est très difficile de réaliser une impression de bonne qualité sur toute la surface des cartes.

La demande de brevet GB-A-22796105 (ayant servi de base pour la présentation en deux parties de la revendication 1) concerne un procédé de fabrication d'une carte à circuit intégré laminée. Il comporte des étapes successives consistant à placer un circuit imprimé et une feuille de protection en matériau thermoplastique sous une presse, à faire un vide et à chauffer ladite feuille et le circuit imprimé, puis à presser l'ensemble pour noyer le circuit imprimé dans la feuille de matériau de protection.

L'invention permet de pallier tous ces inconvénients liés aux procédés de l'art antérieur. Pour cela, elle propose d'utiliser au plus une feuille plastique perforée, de manière à éviter les problèmes d'indexation des feuilles perforées les unes par rapport aux autres, et de remplacer les autres feuilles perforées, ou la résine, par au moins un film de matériau adhésif thermoactivable présentant une surface identique à celle de la carte à réaliser.

L'invention a plus particulièrement pour objet un procédé de fabrication d'une carte à puce sans contact conforme à la revendication 1.

Le procédé selon l'invention permet d'éviter l'utilisation de plusieurs feuilles perforées si bien que les problèmes d'indexation de ces feuilles les unes par rapport aux autres sont écartés. Le matériau adhésif présente une ductilité telle, à froid, qu'il permet d'absorber toute surépaisseur engendrée par la présence d'un module électronique ou une puce. De plus, lors de l'étape de lamination à chaud, le matériau adhésif flue. Ce fluage permet d'envelopper l'ensemble électronique sans défaut, c'est à dire sans création de surépaisseurs. L'apparition de surépaisseurs étant évitée, le module électronique n'est pas fragilisé et la surface des cartes après lamination est parfaitement plane. En conséquence, le procédé selon l'invention permet d'obtenir des cartes à puce sans contact fiables et esthétiques puisqu'elles ne présentent pas de défauts superficiels. Le procédé est en outre rapide car il nécessite très peu d'étapes, et il présente un coût réduit. Il peut donc être adapté à une production de très grande masse.

Selon une autre caractéristique de l'invention, le film adjacent comporte au moins un autre film de matériau adhésif thermoactivable.

Selon une autre caractéristique de l'invention, le film adjacent comporte au moins une feuille polymère.

De plus, d'autres feuilles peuvent être laminées de part et d'autre du produit obtenu, en même temps ou ultérieurement.

Selon une autre caractéristique de l'invention, la lamination à chaud est réalisée à une température comprise entre 50 et 140°C.

Le(s) film(s) de matériau adhésif thermoactivable est (sont) par exemple composé(s) d'un matériau appartenant à la famille des PE (polyéthylènes) modifiés, à la famille des PU (polyuréthanes) modifiés, ou à la famille des PP (polypropylènes) modifiés.

Selon une autre caractéristique de l'invention, le(s) film(s) de matériau adhésif thermoactivable est (sont) préalablement fixé(s) sur une (des) feuille(s) support par collage à chaud.

Selon une autre caractéristique de l'invention, la (les) feuille(s) support est (sont) réalisée(s) en PVC (polychlorure de vinyle), en PC (polycarbonate), en ABS (Acrylonitrile-Butadiène-Styrène), en PET (polyéthylène téréphtalate) ou en carton.

De plus l'ensemble électronique peut être au préalable fixé sur le(s) film(s) de matériau adhésif thermoactivable par un apport local de pression et de température.

D'autres particularités et avantages de l'invention apparaîtront à la lecture de la description donnée à titre d'exemple illustratif mais non limitatif et faite en référence aux figures annexées qui schématisent:
- la figure 1A, déjà décrite, une vue en coupe éclatée d'une carte à puce sans contact fabriquée selon un procédé connu de l'art antérieur,
- la figure 1B, déjà décrite, une vue en coupe d'une carte à puce sans contact fabriquée selon un autre procédé connu de l'art antérieur,
- les figures 2A et 2B, une vue en coupe respectivement éclatée et non éclatée d'une carte à puce sans contact au cours des étapes de fabrication d'un procédé selon l'invention,
- la figure 3, une vue en coupe d'une autre carte à puce sans contact selon une variante de réalisation,
- les figures 4A et 4B, une vue en coupe respectivement éclatée et non éclatée d'une autre carte à puce sans contact au cours de ses étapes de fabrication selon une autre variante de réalisation,
- la figure 5, une vue en coupe d'une autre carte à puce sans contact selon une troisième variante de réalisation,
- la figure 6, une vue en coupe d'une autre carte à puce sans contact selon une quatrième variante de réalisation.

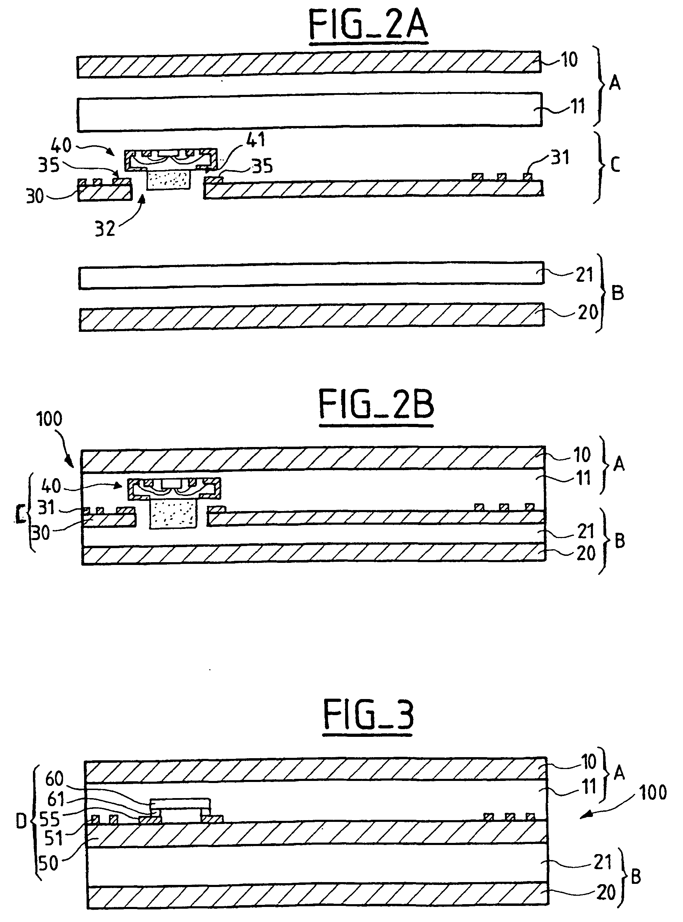

Les étapes d'un procédé de fabrication d'une carte à puce sans contact selon l'invention sont schématisées sur les figures 2A et 2B. Ces figures schématisent une carte à puce respectivement avant et après l'assemblage des différents éléments de constitution du corps de carte 100 par lamination à chaud.

Une première étape du procédé selon l'invention consiste à fournir un film A comportant au moins un matériau adhésif thermoactivable 11 présentant une surface au moins égale à celle de la carte à réaliser. Un ensemble électronique référencé C est disposé contre une surface du film de matériau adhésif thermofusible 11. Au moins un film adjacent B est ensuite laminé à chaud contre cette surface afin de noyer au moins partiellement l'ensemble électronique C dans ledit matériau thermoactivable.

Dans l'exemple des figures 2A et 2B, le film adjacent B comporte au moins un autre film de matériau adhésif thermoactivable 21. De plus, dans cet exemple les deux films de matériau adhésif thermofusible 11 et 21 peuvent être reportés respectivement sur deux feuilles support 10 et 20. Ces films de matériau adhésif thermofusible sont utilisés en tant que feuilles de constitution de la structure de la carte. Ils peuvent éventuellement être préalablement fixés par collage à chaud sur les feuilles support 10 et 20. Les matériaux adhésifs thermofusibles 11 et 21 reportés sur les feuilles support 10 et 20 forment ainsi respectivement deux films adjacents A et B de constitution du corps de carte 100.

Dans une variante de réalisation, le matériau adhésif thermoactivable peut être fixé sur une autre feuille pelable ou non.

Les feuilles support 10 et 20 sont de préférence en matière plastique, par exemple en PVC (polychlorure de vinyle), en PC (polycarbonate), en ABS (Acrylonitrile-Butadiène-Styrène) ou en PET (polyéthylène téréphtalate). Dans une variante de réalisation, on peut en outre envisager d'utiliser de telles feuilles support en papier ou en carton compte tenu de la bonne adhésivité du matériau adhésif thermoactivable. Ces feuilles support 10 et 20 sont destinées à former les surfaces extérieures recto et verso de la carte.

Le matériau adhésif présente des propriétés de ductilité à froid et de thermoadhésion. Il appartient notamment, dans l'exemple, à la famille des PE (polyéthylènes) modifiés, à la famille des PU (polyuréthanes) modifiés ou à la famille des PP (polypropylènes) modifiés. Il ne doit pas être collant à la température ambiante de manière à ce qu'il puisse être manipulé au même titre qu'une feuille plastique classique. Il peut en outre contenir une certaine proportion de matériau thermodurcissable.

Dans un autre exemple, le matériau adhésif utilisé est un matériau à base de PU commercialisé par la société PLASTREE sous la référence POLYFIX BM.

Dans un autre exemple encore, le matériau adhésif utilisé est une colle à réaction thermoplastique non autocollante, fournie en rouleau notamment par la société BEIERSDORF sous la référence TESA 8420. Elle comporte notamment un mélange de résine phénolique et un caoutchouc nitrile. Elle est apte à présenter un comportement (ou une phase) thermoplastique seul, et une phase thermodurcissable en fonction de la température. De préférence, le matériau thermoactivable possède un état non réversible (ou non réactivable) après activation spécifique.

Les dimensions des films 11 et 21 et des feuilles support 10 et 20 sont choisies de telle sorte que leur surface est au moins identique à celle de la carte que l'on désire réaliser. Mais celles-ci peuvent être beaucoup plus grandes et permettre une lamination de plusieurs positions simultanément. Une découpe ultérieure permet alors d'obtenir une carte aux dimensions désirées.

L'épaisseur des films 11 et 21 de matériau adhésif thermofusible est choisie de telle manière que, une fois la carte finie, c'est à dire après fluage au cours de la dernière étape de lamination à chaud, ces films présentent une épaisseur identique à celle des feuilles perforées, ou de la résine, qu'ils remplacent. Le procédé selon l'invention permet de réaliser des cartes d'épaisseur normalisée selon la norme ISO mais aussi des cartes plus ou moins épaisses selon les applications auxquelles elles sont destinées.

Dans l'exemple schématisé sur les figures 2A et 2B, l'ensemble électronique C est réalisé sur une feuille plastique 30, par exemple en PVC. Cette feuille plastique 30 est munie d'une perforation 32 prévue pour y loger un module électronique 40. Une antenne 31 est réalisée sur cette feuille plastique par exemple par incrustation, lamination ou sérigraphie, selon un procédé classique bien connu de l'homme de l'art. Les bornes de connexion 35 de l'antenne sont électriquement reliées aux plages de contact 41 du module électronique, lesquelles sont situées sur la face interne de la grille métallique du module, par l'intermédiaire d'une soudure étain-plomb, par une soudure à ultrason ou alors au moyen d'une colle conductrice par exemple.

Une dernière étape consiste ensuite à assembler et à solidariser les différents éléments de constitution du corps de carte 100. Pour cela, on effectue une lamination à chaud. En début de cette étape de lamination, avant l'établissement total de la température, le matériau adhésif thermoactivable présente une ductilité telle qu'il permet d'absorber toute surépaisseur engendrée par la présence de l'ensemble électronique C. Ce matériau adhésif thermoactivable présente une ductilité à froid, avant lamination, typiquement inférieure à 95 Shore A. Cette unité "Shore A" est donnée par la norme française NFT 51.109. Ensuite, le matériau thermoactivable des films 11 et 21 se ramollit sous l'action du chauffage et sous l'effet de la pression il flue autour de l'ensemble électronique C, et notamment autour du module 40 de manière à conserver une épaisseur globale constante. L'adhésif permet, par sa ductilité à froid puis par son fluage ensuite, d'envelopper le module sans apparition de défaut ou de surépaisseur. L'adhésif présente des propriétés telles qu'il joue un rôle d'amortisseur permettant ainsi l'obtention d'une carte de planéité améliorée. Le fluage de ce matériau adhésif thermofusible est bien contrôlé, et dans tous les cas beaucoup mieux contrôlé que le fluage d'une feuille plastique ordinaire telle que du PVC, si bien que l'on arrive à obtenir une surface plane sans apparition de bulles d'air piégées autour de l'ensemble électronique, et sans création de surépaisseurs au dessus du module électronique. De plus, les films d'adhésif 11 et 21 n'étant pas perforés, il n'y a pas de problèmes d'indexation de ces films par rapport à la feuille perforée 30 support de l'ensemble électronique C.

La lamination permet donc de souder les différentes couches de constitution du corps de carte entre-elles. La lamination peut être réalisée au moyen d'un dispositif de plaques de lamination pour presses à plateaux ou au moyen d'un dispositif à rouleaux.

D'autres feuilles de constitution du corps de carte peuvent être laminées de part et d'autre du produit, constitué par l'ensemble électronique C noyé dans le matériau adhésif thermoactivable, soit en même temps que la dernière étape de lamination à chaud soit dans une étape ultérieure.

Le point de fusion du matériau adhésif thermofusible autorise des laminations à chaud à des températures inférieures aux températures classiquement utilisées pour des laminations à chaud. Ainsi, la lamination peut être effectuée à une température comprise entre 50 et 140°C.

De plus, le matériau adhésif thermofusible présente de préférence des propriétés d'irréversibilité jusqu'à la température de lamination. Pour cela, il comporte avantageusement une phase thermodurcissable. Les cartes fabriquées à partir d'un tel matériau et selon le procédé de l'invention satisfont ainsi à toute contrainte de tenue en température et de stabilité dimensionnelle.

Le schéma en coupe de la figure 3 illustre une variante de réalisation du procédé. En fait, dans cette variante, seul l'ensemble électronique utilisé est différent. Dans cet exemple, en effet, l'ensemble électronique, référencé D, comporte soit un petit module soit une puce 60 de circuit intégré dont certains plots de contact 61 sont connectés aux bornes de connexion 55 d'une antenne 51. L'antenne 51 est réalisée de manière classique par lamination, incrustation ou sérigraphie sur une feuille plastique 50 non perforée, par exemple en PVC. La connexion entre les plots de contact 61 de la puce 60 et les bornes de connexion 55 de l'antenne est réalisée selon une méthode classique et bien connue de l'homme de l'art, soit par l'intermédiaire d'un montage dit "flip chip", soit au moyen d'une colle contenant des particules conductrices d'argent, ou encore par l'intermédiaire de fils conducteurs soudés. Dans ce cas aussi, lors de l'étape de lamination à chaud, le matériau adhésif dans un premier temps se comprime localement pour absorber toute surépaisseur puis flue et permet d'envelopper la puce 60 sans apparition de défaut ou de surépaisseur et permet donc d'obtenir une surface de carte plane.

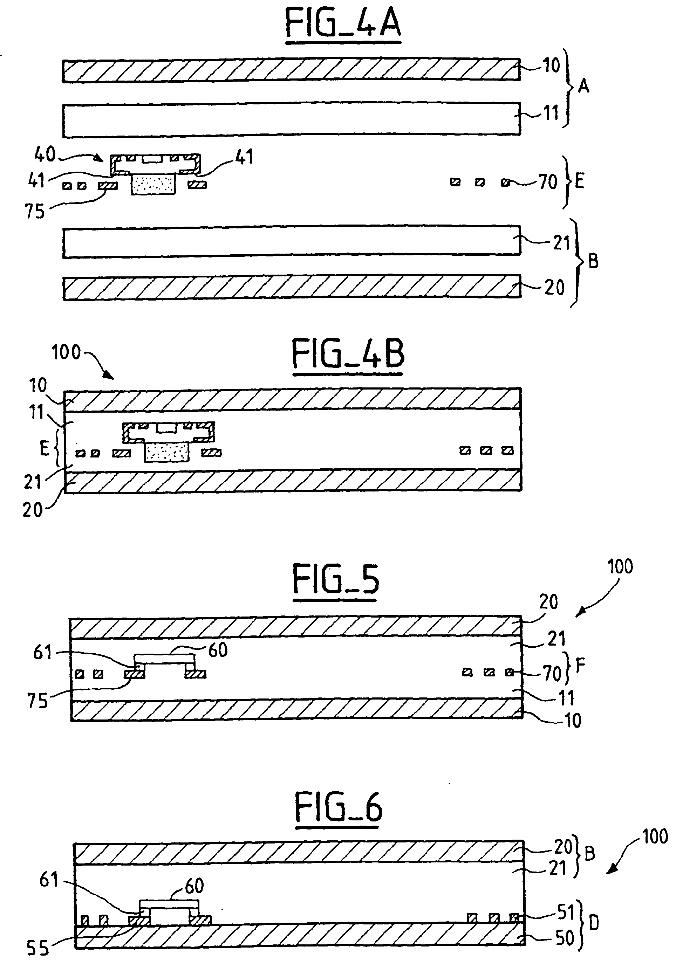

Selon une autre variante de réalisation du procédé selon l'invention, illustrée par les schémas des figures 4A et 4B, l'ensemble électronique utilisé, référencé E, n'est pas réalisé sur une feuille support en plastique mais il est simplement constitué d'une antenne 70 en fil bobiné, ou sérigraphiée sur le film thermoadhésif 11. Les bornes de connexion 75 de cette antenne 70 sont connectées, par exemple au moyen d'une soudure étain-plomb, aux plages de contact 41 d'un module électronique 40 (figure 4A). Dans ce cas, les plages de contact 41 du module 40 peuvent être situées indépendamment sur la face interne ou sur la face externe de la grille, métallique du module. Au cours de l'étape ultérieure de lamination à chaud, l'antenne et le module sont complètement noyés dans l'épaisseur du corps de carte, c'est à dire dans les deux films de matériau adhésif thermoactivable 11 et 21 qui se collent l'un contre l'autre et deviennent complètement indissociables (figure 4B).

La figure 5 schématise une autre variante selon laquelle l'ensemble électronique, référencé F, est constitué d'une antenne 70 sérigraphiée sur le film thermoadhésif 11 ou réalisée en fil bobiné dont les bornes de connexion 75 sont connectées aux plots de contact 61 d'une puce de circuit intégré 60 selon une méthode classique, par exemple par un montage "flip chip", ou par collage au moyen d'une colle conductrice à argent, ou par l'intermédiaire de fils conducteurs soudés.

Dans les deux derniers cas qui viennent d'être décrits, l'ensemble électronique E, D, composé d'une antenne en fil bobiné 70 et d'un module électronique 40, ou d'une puce de circuit intégré 60, peut être au préalable posé sur les films 11, 21 de matériau adhésif thermoactivable puis fixé en appliquant un élément chauffant sur l'ensemble électronique pour réaliser un apport local de pression et de température.

On peut également envisager d'apporter de l'énergie sous forme de rayonnement à la surface d'un film de matériau adhésif thermoactivable, puis de poser l'ensemble électronique sur ce film pour effectuer un précollage de l'ensemble électronique.

Selon une autre variante de réalisation de l'invention, telle que schématisée sur la figure 6, il est en outre possible de ne fournir qu'un seul film B comportant au moins un matériau adhésif thermoactivable 21. Ce matériau 21 peut par exemple être reporté sur une feuille support 20. Dans ce cas, l'ensemble électronique est par exemple supporté par une face d'un film adjacent constitué par au moins une feuille polymère non perforée 50, dont l'autre face est destinée à former l'une des surfaces extérieures de la carte à puce sans contact. Par conséquent, dans ce cas, l'ensemble électronique D utilisé est constitué d'une part par une antenne 51, réalisée sur le film adjacent 50 selon un procédé classique de sérigraphie, laminage ou incrustation, et d'autre part par une puce de circuit 60 dont les plots de contact 61 sont reliés électriquement aux bornes de connexion 55 de l'antenne 51. Au cours de l'étape ultérieure de lamination à chaud, le matériau adhésif se ramollit et flue, de manière à envelopper la puce et l'antenne, et adhère à la surface du film adjacent 50 en matériau polymère.

A titre indicatif, dans tous les exemples réalisés, l'ensemble électronique utilisé présentait une surface d'environ 6x4 mm et une hauteur de pénétration de 50 µm dans un film adhésif thermoactivable de 100 µm d'épaisseur. Grâce à ces dimensions de l'ensemble électronique et du film de matériau adhésif thermoactivable, la carte obtenue ne présente pas de défauts de surface, les surépaisseurs étant absorbées par le matériau adhésif sans endommager l'ensemble électronique.

Le fait d'utiliser au moins un film de matériau adhésif thermoactivable, dont la surface est identique à celle de la surface de la carte à réaliser, pour fabriquer des cartes à puce sans contact permet d'éviter les problèmes soulevés par les procédés classiques et dus à l'utilisation de feuilles plastiques ordinaires perforées.

Selon une variante de réalisation, l'antenne 31, 51, 70 de tous les modes de réalisation qui viennent d'être décrits, peut être réalisée directement dans le circuit d'une puce de circuit intégré, la carte étant utilisée dans un lecteur avec un couplage électromagnétique très précis.

Grâce à l'invention, on utilise tout au plus une seule feuille plastique perforée, et seulement dans le cas où l'ensemble électronique est réalisé sur une feuille support et comporte un module. Les problèmes d'indexation de plusieurs feuilles perforées les unes par rapport aux autres sont par conséquent éliminés. Ces problèmes d'indexation étant écartés, cela entraîne une réduction de coût et une amélioration du rendement de fabrication. Le procédé selon l'invention ne comporte qu'une seule étape de lamination à chaud, ce qui contribue à réduire le coût et à accélérer la cadence de fabrication.

D'autre part, l'adhésif thermoactivable ayant une très grande ductilité à froid, il permet d'absorber toute surépaisseur en début de lamination. Puis, par sa grande capacité de fluage, une fois la température établie, il permet d'envelopper l'ensemble électronique sans création de bulles d'air, ni de surépaisseurs notamment au-dessus du module électronique ou de la puce. Par conséquent, le module, ou la puce, n'est pas fragilisé. La carte finie présente donc une fiabilité accrue et une surface plane sans défauts superficiels. Les défauts superficiels n'existant pas, une impression de bonne qualité peut être réalisée sur toute la surface de la carte, pour réaliser un décor ou une personnalisation. La carte sans contact obtenue par le procédé selon l'invention est donc plus esthétique, plus fiable et moins coûteuse que les cartes obtenues par les procédés classiques de l'art antérieur.

De plus, étant donné qu'il n'y a pas d'apparition de surépaisseurs, les plaques de lamination du dispositif de lamination ne sont pas détériorées par ces surépaisseurs. Une telle détérioration des plaques apparaissait en effet dans les procédés antérieurs et entraînait à terme une dégradation de l'aspect des cartes. Grâce à l'invention, les cartes ont un meilleur aspect visuel et les plaques de lamination du dispositif de lamination sont changées moins fréquemment que dans les procédés classiques.

Les exemples qui viennent d'être décrits ne sont qu'illustratifs et l'invention ne se limite pas à ces modes de réalisation. On notera en particulier que l'on peut ajouter autant de films de matériau adhésif thermofusible que l'on veut, le nombre de ces films n'étant aucunement limité à 1 ou 2.

## Revendications

1. Procédé de fabrication d'une carte à puce sans contact comportant un ensemble électronique (C; D; E; F) noyé dans un corps de carte (100) constitué de plusieurs films laminés à chaud, **caractérisé en ce qu'**il comporte les étapes suivantes consistant à :
- fournir un film (A) comportant au moins un matériau adhésif thermoactivable (11) non collant à température ambiante, présentant une surface au moins égale à celle de la carte à réaliser, et une ductilité à froid avant lamination permettant d'absorber, par compression locale du matériau, toute surépaisseur créée par l'ensemble électronique pressé contre lui, de façon à ne pas endommager ni fragiliser ledit ensemble électronique
- disposer ledit ensemble électronique (C; D; E; F) contre une surface dudit film de matériau adhésif thermoactivable (11), et
- laminer à chaud au moins un film adjacent (B) contre ladite surface de telle sorte que, dans un premier temps, le materiau se comprime localement pour absorber toute surépaisseur, ledit ensemble électronique (C; D; E; F) pénétrant ensuite au moins partiellement dans ledit matériau adhésif thermoactivable.

2. Procédé selon la revendication 1, **caractérisé en ce que** ledit film adjacent (B) comporte au moins un autre film de matériau adhésif thermoactivable (21).

3. Procédé selon la revendication 1, **caractérisé en ce que** ledit film adjacent (B) comporte au moins une feuille polymère (20; 50).

4. Procédé selon l'une des revendications 1 à 3, **caractérisé en ce que** l'ensemble électronique (C; D; E; F) est composé d'une antenne (31; 51; 70) connectée, par ses bornes de connexion(35; 55; 75), aux plages de contact (41) d'un module électronique (40) ou aux plots de contact (61) d'une puce (60) de circuit intégré.

5. Procédé selon l'une des revendications 1 à 3, **caractérisé en ce que** ledit ensemble électronique (C; D; E; F) comporte une puce de circuit intégré et une antenne (31; 51; 70) gravée dans le circuit.

6. Procédé selon la revendication 4, **caractérisé en ce que** l'ensemble électronique (D) utilisé comporte une feuille plastique (50) supportant une antenne (51) dont les bornes de connexion (55) sont électriquement reliées aux plots de contact (61) d'une puce de circuit intégré (60) ou d'un module.

7. Procédé selon la revendication 4, **caractérisé en ce que** l'ensemble électronique (C) utilisé comporte une feuille plastique (30.) munie d'une perforation (32) et supportant une antenne (31) dont les bornes de connexion (35) sont électriquement reliées aux plages de contact (41) d'un module électronique (40) logé dans ladite perforation (32).

8. Procédé selon la revendication 4, **caractérisé en ce que** l'ensemble électronique (E; F) utilisé comporte une antenne en fil bobiné (70), dont les bornes de connexion (75) sont connectées aux plages de contact (41) d'un module (40), ou aux plots de contact (61) d'une puce de circuit intégré (60).

9. Procédé selon la revendication 8, **caractérisé en ce que** l'ensemble électronique, composé d'une antenne en fil bobiné (70) et d'un module électronique (40), ou d'une puce de circuit intégré (60), est au préalable fixé sur le (les) film(s) de matériau adhésif thermoactivable (11 et 21) par un apport local de pression et de température.

10. Procédé selon l'une des revendication 1 à 2, **caractérisé en ce que** le(s) film(s) de matériau adhésif thermoactivable (11; 21) est (sont) composé(s) d'un matériau appartenant à la famille des PE (polyéthylènes) modifiés, à la famille des PU (polyuréthanes) modifiés ou à la famille des PP (polypropylènes) modifiés.

11. Procédé selon l'une des revendications 1 à 2, **caractérisé en ce que** le matériau adhésif thermoactivable (11, 21) présente une ductilité à froid, avant lamihation, inférieure à 95 Shore A.

12. Procédé selon l'une des revendications 1 à 2, **caractérisé en ce que** le matériau adhésif thermoactivable (11, 21) présente un état non réactivable après activation spécifique jusqu'à la température de lamination.

13. Procédé selon la revendication 12, **caractérisé en ce que** le matériau adhésif thermoactivable (11, 21) comporte une phase thermodurcissable.

14. Procédé selon l'une des revendications 1 à 2, **caractérisé en ce que** le(s) film(s) de matériau adhésif thermoactivable (11; 21) est (sont) préalablement fixé(s) sur une (des) feuille(s) support (10; 20) par collage à chaud.

15. Procédé selon la revendication 14, **caractérisé en ce que** la (les) feuille(s) support (10; 20) est (sont) réalisée(s) en PVC (polychlorure de vinyle), en PC (polycarbonate), en ABS (Acrylonitrile-Butadiène-Styrène), en PET (polyéthylène téréphtalate) ou en carton.

16. Procédé selon la revendication 1, **caractérisé en ce que** la lamination à chaud est réalisée à une température comprise entre 50 et 140°C.

## Claims

1. A method of manufacturing a contactless chip card comprising an electronic assembly (C; D; E; F) embedded in a card body (100) consisting of several hot-laminated films, **characterised in that** it comprises the following steps consisting of:
- providing a film (A) comprising at least one heat-activated adhesive material (11) that is not sticky at ambient temperature, having a surface area at least equal to that of the card to be produced, and a ductility when cold before lamination making it possible to absorb, by local compression of the material, any protrusion created by the electronic assembly pressed against it, so as neither to damage nor weaken the said electronic assembly,
- disposing the said electronic assembly (C; D; E; F) against a surface of the said film of heat-activated adhesive material (11),
- hot-laminating at least one adjacent film (B) against the said surface so that, initially, the material compresses locally in order to absorb any protrusion, the said electronic assembly (C; D; E; F) then at least partially penetrating the said heat-activated adhesive material.

2. A method according to claim 1, **characterised in that** the said adjacent film (B) comprises at least one other film of heat-activated adhesive material (21).

3. A method according to claim 1, **characterised in that** the said adjacent film (B) comprises at least one polymer sheet (20; 50).

4. A method according to one of claims 1 to 3, **characterised in that** the electronic assembly (C; D; E; F) is composed of an antenna (31; 51; 70) connected, by its connection terminals (35; 55; 75), to the contact areas (41) of an electronic module (40) or to the contact pads (61) of an integrated-circuit chip (60).

5. A method according to one of claims 1 to 3, **characterised in that** the said electronic assembly (C; D; E; F) comprises an integrated-circuit chip and an antenna (31; 51; 70) etched in the circuit.

6. A method according to claim 4, **characterised in that** the electronic assembly (D) used comprises a plastic sheet (50) supporting an antenna (51), the connection terminals (55) of which are electrically connected to the contact pads (61) of an integrated-circuit chip (60) or of a module.

7. A method according to claim 4, **characterised in that** the electronic assembly (C) used comprises a plastic sheet (30) provided with a perforation (32) and supporting an antenna (31), the connection terminals (35) of which are electrically connected to the contact pads (41) of an electronic module (40) housed in the said perforation.

8. A method according to claim 4, **characterised in that** the electronic assembly (E; F) used comprises an antenna made from a coiled wire (70), the connection terminals (75) of which are connected to the contact areas (41) of a module (40) or to the contact pads (61) of an integrated-circuit chip (60).

9. A method according to claim 8, **characterised in that** the electronic assembly, composed of an antenna made from coiled wire (70) and an electronic module (40), or an integrated-circuit chip (60) is first fixed to the film or films of heat-activated adhesive material (11 and 21) by a local addition of pressure and temperature.

10. A method according to one of claims 1 or 2, **characterised in that** the film or films of heat-activated adhesive material (11; 21) is or are composed of a material belonging to the family of modified PEs (polyethylenes), to the family of modified PUs (polyurethanes) or to the family of modified PPs (polypropylenes).

11. A method according to one of claims 1 to 2, **characterised in that** the heat-activated adhesive material (11, 21) has a ductility when cold, before lamination, of less than 95 Shore A.

12. A method according to one of claims 1 to 2, **characterised in that** the heat-activated adhesive material (11, 21) has a state that is not reactivatable after specific activation up to the lamination temperature.

13. A method according to claims 12, **characterised in that** the heat-activated adhesive material (11, 21) comprises a thermosetting phase.

14. A method according to one of claims 1 to 2, **characterised in that** the film or films of heat-activated adhesive material (11; 21) is or are first fixed to one of the support sheet or sheets (10; 20) by hot adhesive bonding.

15. A method according to claim 14, **characterised in that** the support sheet or sheets (10; 20) is or are produced from PVC (polyvinyl chloride), PC (polycarbonate), ABS (acrylonitrile-butadienestyrene), PET (polyethylene terephthalate) or cardboard

16. A method according to claim 1, **characterised in that** the hot lamination is carried out at a temperature of between 50° and 140°C

## Patentansprüche

1. Herstellungsverfahren für eine kontaktlose Chipkarte, die eine elektronische Einheit (C, D, E, F) enthält, welche in einen Kartenkörper (100) versenkt ist, welcher aus mehrerer heißlaminierten Folien besteht, **dadurch gekennzeichnet, dass** es folgende Phasen umfasst, die darin bestehen:
- eine Folie (A) bereitzustellen, die mindestens ein wärmeaktivierbares Klebematerial (11) umfasst, das bei Umgebungstemperatur nicht klebt. Diese Folie hat eine Oberfläche, die mindestens so groß ist, wie die Oberfläche der herzustelleden Karte, und eine Kaltduktilität vor der Lamination, die durch örtliches Zusammendrücken des Materials Überhöhungen, die durch das Dagegenpressen der elektronischen Einheit entstanden, auogleicht, so dass besagte elektronische Einheit nicht beschädigt wird oder empfindlich ist,
- die besagte elektronische Einheit (C, D, E, F) an einer Fläche der besagten Folie aus wärmeaktivierbarem Klebematerial (11) anzulegen, und
- mindestens eine anliegenden Folie (B) auf besagter Fläche heiß zu laminieren, so dass das Material zunächst lokal zusammengedrückt wird, um Überhöhungen auszugleichen. Besagte elektrische Einheit (C, D, E, F) dringt anschließend teilweise in das wärmeaktivierbare Klebematerial ein.

2. Verfahren nach Patentanspruch 1, **dadurch gekennzeichnet, dass** besagte anliegende Folie (B) mindestens eine andere Folie (21) aus wärmeaktivierbarem Klebematerial umfasst.

3. Verfahren nach Patentanspruch 1, **dadurch gekennzeichnet, dass** besagte anliegende Folie (B) mindestens eine Polymerfolie (20, 50) umfasst.

4. Verfahren nach einem der Patentansprüche 1 bis 3, **dadurch gekennzeichnet, dass** die elektronische Einheit (C, D, E, F) aus einer Antenne (31, 51, 70) besteht, die über ihre Anschlussklemmen (35, 55, 75) an die Bondinseln(41) eines elektronischen Moduls (40) oder an die Kontakthöcker (61) eines Chips (60) angeschlossen ist.

5. Verfahren nach einem der Patentansprüche 1 bis 3, **dadurch gekennzeichnet, dass** besagte elektronische Einheit (C, D, E, F) einen Chip und eine in diesen Chip eingeprägte Antenne (31, 51, 70) umfasst.

6. Verfahren nach Patentanspruch 4, **dadurch gekennzeichnet, dass** die verwendete elektronische Einheit (D) eine Kunststofffolie (50) umfasst, die eine Antenne (51) trägt, deren Anschlussklemmen (55) elektrisch mit den Kontakthöckern (61) eines Chips (60) oder eines Moduls verbunden sind.

7. Verfahren nach Patentanspruch 4, **dadurch gekennzeichnet, dass** die verwendete elektronische Einheit© eine Kunststofffolie (30) mit einer Perforierung (32) umfasst, und eine Antenne (31) trägt, deren Anschlussklemmen (35) elektrisch mit den Bondinseln (41) eines in dieser Perforation befindlichen elektronischen Moduls (40) verbunden sind.

8. Verfahren nach Patentanspruch 4, **dadurch gekennzeichnet, dass** die verwendete elektronische Einheit (E, F) eine Antenne aus Wickeldraht (70) umfasst, deren Anschlussklemmen (75) mit den Bondinseln (41) eines Moduls (40) oder den Kontakthöckern (61) eines Chips (60) verbunden sind.

9. Verfahren nach Patentanspruch 8, **dadurch gekennzeichnet, dass** die aus einer Antenne aus Wickeldraht (70) und einem elektronischen Modul (40) oder einem Chip (60) bestehende elektronische Einheit vorher auf der (den) Folie(n) aus wärmeaktivierbarem Klebematerial (11 und 21) durch lokale Druck- und Temperatureinwirkung fixiert wird.

10. verfahren nach einem der Patentansprüche 1 bis 2, **dadurch gekennzeichnet, dass** die Folie(n) aus wärmeaktivierbarem Klebematerial (11, 21) aus Materialen besteht (bestehen), die der Familie der modifizierten PE (Polethylene), der Familie der modifizierten Pu (polyurethane) oder der Familie der modifizierten PP (Polypropylene) angehören.

11. Verfahren nach einem der Patentansprüche 1 bis 2, **dadurch gekennzeichnet, dass** das wärmeaktivierbare Klebematerial (11, 21) vor der Lamination eine Kaltduktilität unter 95 Shore A aufweist.

12. Verfahren nach einem der Patentansprüche 1 bis 2, **dadurch gekennzeichnet, dass** das wärmeaktivierbare Klebematerial (11, 21) nach einer spezifischen Aktivierung einen nicht aktivierbaren Zustand bis zur Laminationstemperatur aufweist.

13. Verfahren nach Patentanspruch 8, **dadurch gekennzeichnet, dass** das wärmeaktivierbare Klebematerial (11, 21) einer wärmehärtende Phase umfasst.

14. Verfahren nach einem der Patentansprüche 1 bis 2, **dadurch gekennzeichnet, dass** die Folie(n) aus Wärmeaktivierbarem Klebematerial (11. 12) vorher durch Heißkleben auf eine (der) Trägerfolie(n). (10, 20) fixiert wird.

15. Verfahren nach Patentanspruch 14, **dadurch gekennzeichnet, dass** (die) Trägerfolie(n) (10, 20) aus PVC (Polyvinylchlorid), PC (Polykarbonat), ABS (AcrylnitrilButadien-Styrol), PET (Polyethylenterephthalat) oder Pappe hergestellt wird.

16. Verfahren nach Patentanspruch 1, **dadurch gekennzeichnet, dass** die Heißlamination bei einer Temperatur zwischen 50 und 140°C erfolgt.
